# EUROPÄISCHE PATENTANMELDUNG

(11) **EP 0 988 912 A1**
(43) Veröffentlichungstag der Anmeldung: **29.03.2000**
(21) Anmeldenummer: 98810843.7
(22) Anmeldetag: 26.08.1998
(51) Int. Cl.: B23C 5/24, B23B 29/034

(54) **Werkzeug, insbesondere Bohrstange**

(71) Anmelder: MAS Maschinenbau AG, 9475 Sevelen (CH)
(72) Erfinder: Nigg, Hansuli, 9470 Buchs (CH)
(74) Vertreter: Riederer, Conrad A., Dr.

(57) **Zusammenfassung**

Das Werkzeug besitzt einen praktisch radial verschiebbaren Schneidenträger (15) mit einer Schneide (17). Dieser Verschiebung dient eine Stellschraube (19), welche ein erstes Gewinde (23) und ein zweites Gewinde (25) aufweist. Diese Gewinde besitzen verschiedene Steigungen, wobei der Steigungsunterschied beispielsweise 0,1 mm pro Umdrehung der Stellschraube (19) beträgt. Das erste Gewinde (23) passt in die Gewindebohrung (29), und das zweite Gewinde (25) passt in die Gewindebohrung (27) des Schneidenträgers. Eine Skala (33) am Schraubenkopf ermöglicht eine genaue Einstellung der Schneide (17).

## Beschreibung

Die vorliegende Erfindung betrifft ein Werkzeug mit einem Grundkörper, welcher eine Gewindebohrung aufweist, einer Schneide, einem Verstellorgan mit einem Gewinde, einer Stellschraube mit einem Gewinde, das in die Gewindebohrung des Grundkörpers passt und dem Verstellen des Verstellorgans dient, und Arretiermitteln zum Arretieren der Schneide bzw. des Verstellorgans. Durch die DE-A-1477356 ist ein einstellbares Werkzeug bekannt geworden, bei welchem die Schneide durch eine Stellschraube radial verstellbar ist. Ausser dieser Stellschraube ist noch eine zusätzliche Stellschraube zur axialen Verstellung vorgesehen. Weiter ist auch noch ein Keil notwendig. Durch diese zusätzlichen Teile wird das Werkzeug kompliziert und teuer. Von besonderem Nachteil ist auch die Tatsache, dass die Stellschraube zur radialen Verstellung der Schneide stirnseitig angeordnet ist. Es ist somit nicht möglich, ein Stufenwerkzeug, z.B. eine Bohrstange mit mehreren radial verstellbaren Schneiden zur Herstellung von Stufenbohrungen zu schaffen. Weiter ist nachteilig, dass der Kopf der Stellschraube im Innern des Werkzeugs sitzt, so dass keine Möglichkeit besteht, eine gut lesbare Skala anzuordnen.

Es ist daher Aufgabe der vorliegenden Erfindung, ein Werkzeug der eingangs erwähnten Gattung zu schaffen, das einfach und kostengünstig in der Herstellung ist und auf einfache Weise genau eingestellt werden kann. Es soll möglichst auch die weiteren Nachteile bekannter Werkzeuge nicht aufweisen.

Gemäss der vorliegenden Erfindung ist ein Werkzeug der eingangs erwähnten Gattung dadurch gekennzeichnet, dass die Stellschraube ein zweites Gewinde aufweist, das eine andere Steigung besitzt als das erste Gewinde der Stellschraube, und dass das Gewinde des Verstellorgans und das zweite Gewinde der Stellschraube zusammenpassen. Dies hat den Vorteil, dass bei einer Umdrehung der Schraube das Verstellorgan lediglich um die Differenz der Steigung der beiden Gewinde bewegt wird.

Dies erlaubt eine sehr genaue Einstellung der Schneide. Beträgt beispielsweise die Steigung des ersten Gewindes 0,6mm und die Steigung des zweiten Gewindes 0,5mm, so wird bei einer vollen Umdrehung der Stellschraube die Schneide lediglich um 0,1mm bewegt. Dies ermöglicht es, die Stellschraube in einer Ebene anzuordnen, die in einem Winkel von 90° zur Axis des Werkzeugs angeordnet ist. Dies wiederum hat den Vorteil, dass beispielsweise an einer Bohrstange mehrere Schneidenträger angeordnet werden können. Es ist also möglich, ein Stufenwerkzeug mit mehreren radial verstellbaren Schneiden zu schafften.

Vorteilhaft beträgt die Steigungsdifferenz zwischen dem erstgenannten und dem zweiten Gewinde den zehnten Teil einer Längenmasseinheit, z.B. mm. Wird somit eine Steigungsdifferenz von 0,1mm gewählt und die Stellschraube mit einer 10er-Skala versehen, so entspricht die Drehung von einem Skalastrich zum anderen einer radialen Verschiebung der Schneide um 0,01mm.

Vorteilhaft wird die Skala durch radial am Kopf der Stellschraube angeordnete Striche gebildet, die mit einer Markierung in Uebereinstimmung gebracht werden können. Diese Markierung weist zweckmässigerweise eine Breite auf, welche der Hälfte des Abstandes zwischen den angrenzenden Enden der Striche am Kopf der Stellschraube entspricht. Dies ermöglicht auch eine Verschiebung der Schneide um 0,005mm abzulesen. Vorteilhaft wird die Markierung durch eine Rille gebildet, die parallel zur Achse der Stellschraube angeordnet ist. Dies ermöglicht eine Ablesung ohne Parallaxfehler auch wenn der Kopf der Stellschraube beim Verstellen in den Schneidenträger eindringt.

Das Verstellorgan ist zweckmässigerweise passend in einer Nut des Grundkörpers angeordnet. Dies ermöglicht eine sehr stabile Halterung des Verstellorgans im Grundkörper des Werkzeugs. Vorteilhaft sind Federmittel, z.B. Federscheiben, vorgesehen, entgegen der Kraft welcher das Verstellorgan durch Einschrauben der Stellschraube verstellbar ist. Die Federmittel verhindern ein Umkehrspiel, wenn die Stellschraube in der engegengesetzten Richtung bewegt wird. Vorteilhaft sind die Federmittel in einer oder mehreren Ausnehmungen im Boden der Nut angeordnet. Dadurch sind sie weitgehend von äusseren Einflüssen geschützt.

Insbesondere bei Bohrstangen kann das Verstellorgan als Schneidenträger ausgebildet sein. Dieser besitzt zweckmässigerweise Führungsmittel, z.B. einen Steg, die mit einer Führung, z.B. einer Nut, im Grundkörper kooperieren. Grundsätzlich ist der Schneidenträger durch die Stellschraube bereits in seiner axialen Lage im Werkzeugträger festgelegt. Durch die Führungsmittel wird jedoch die Genauigkeit und die Stabilität erhöht.

Die Arretiermittel für den Schneidenträger werden vorteilhaft durch einen mit einer Schraube gegen den Schneidenträger pressbaren Keil gebildet, der z.B. in einer schräg zur Nut angeordneten Ausdehnung angeordnet ist. Dies ergibt eine einfache und zweckmässige Konstruktion.

Ausführungsbeispiele der Erfindung werden nun unter Bezugnahme auf die Zeichnung beschrieben. Es zeigt:
- Fig.1: in perspektiver Darstellung ein erstes Ausführungsbeispiel eines Werkzeugs in Form einer Bohrstange,
- Fig.2: eine Ansicht des Kopfes des Werkzeugs von Fig. 1,
- Fig.3: eine vergrösserte Darstellung des Schraubenkopfs der Stellschraube,
- Fig.4: eine Ansicht des Werkzeugs von Figur 2 von rechts gesehen,
- Fig.5: ein Werkzeug, teilweise in auseinandergezogener Darstellung und teilweise im Schnitt entlang der Linie V-V von Figur 2,
- Fig.6: die Gestaltung des Grundkörpers,
- Fig.7: einen Schnitt entlang der Linie VII-VII von Figur 6 zusätzlich mit dem Keil und der Schraube als Arretiermittel,
- Fig.8: ein zweites Ausführungsbeispiel eines Werkzeugs in Form eines Fräsers, teilweise im Schnitt und
- Fig.9: eine Ansicht des Werkzeugs von Fig.8, von rechts betrachtet.

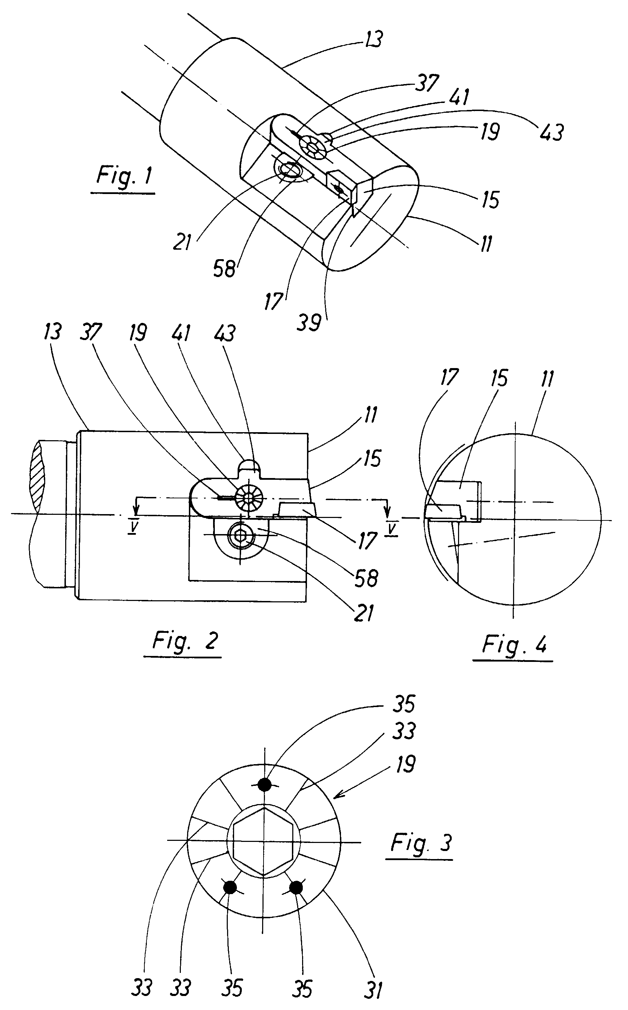

Die Erfindung ist auf verschiedene Arten von Werkzeugen anwendbar und wird nachfolgend zuerst am Beispiel einer Bohrstange unter Bezugnahme auf die Figuren 1 bis 7 beschrieben. Die Bohrstange besteht im wesentlichen aus dem zylindrischen Grundkörper 11, in deren Kopf 13 das als Schneidenträger 15 ausgebildete Verstellorgan mit der Schneide 17 angeordnet ist. Der Schneidenträger 15 ist mit einer Stellschraube 19 verstellbar und ist mittels Schraube 21 und Keil 58 gesichert. Es ist auch möglich, die Bohrstange als Stufenbohrstange mit mehreren Schneiden auszubilden.

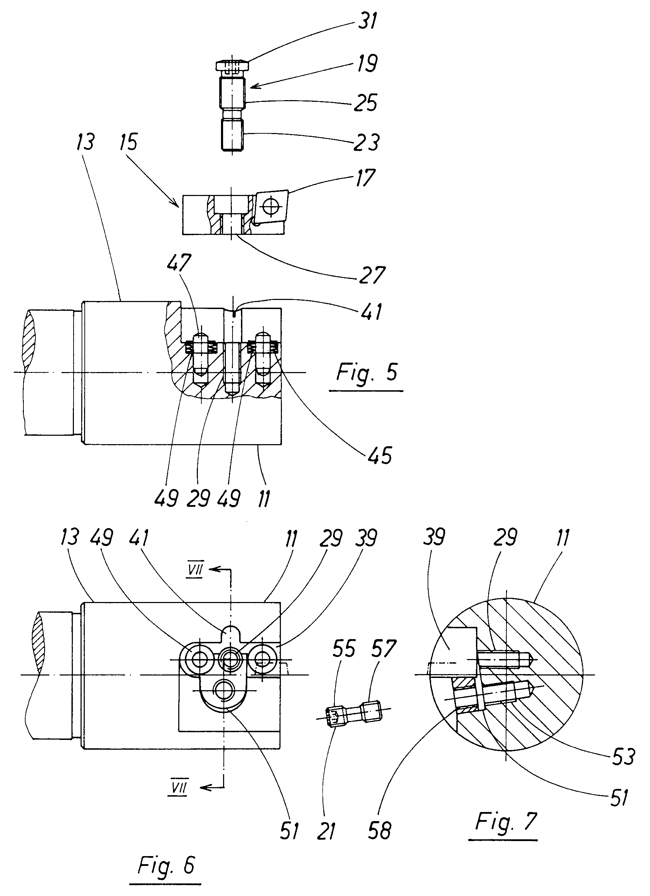

Wie Figur 5 zeigt, weist die Stellschraube 19 ein erstes Gewinde 23 und ein zweites Gewinde 25 auf, zwischen welchen eine Steigungsdifferenz besteht. Das erste Gewinde 23 hat beispielsweise einen Durchmesser von 3,5mm und eine Steigung von 0,6mm. Das zweite Gewinde 25 hat beispielsweise einen Durchmesser von 4mm und eine Steigung von 0,5mm. Da das erste Gewinde 23 einen kleineren Durchmesser als das zweite Gewinde besitzt, kann die Stellschraube 19 ohne zu schrauben durch die Gewindebohrung 27 des Schneidenträgers 15 geführt werden. Das erste Gewinde 23 passt in die Gewindebohrung 29 des Grundkörpers 11, und das zweite Gewinde 25 passt in die Gewindebohrung 27 des Schneidenträgers 15.

Wie insbesondere aus Figur 3 ersichtlich, ist der Schraubenkopf 31 der Stellschraube 19 mit einer Skala versehen, welche aus zehn radial angeordneten Strichen 33 besteht. Da bei kleinen Schraubenkopfdurchmessern keine leicht lesbaren Ziffern angebracht werden können, sind beim gezeigten Ausführungsbeispiel Markierungspunkte 35 vorgesehen. Der alleinstehende Punkt 35 kann als Nullpunkt der Skala betrachtet werden. Die Striche 33 können mit einer Markierung 37 am Schneidenträger in Uebereinstimmung gebracht werden. Diese Markierung kann durch eine Rille gebildet sein, die parallel zur Achse der Stellschraube angeordnet ist. Dies ermöglicht ein genaues Ablesen auch wenn die Stellschraube 19 beim Verstellen tiefer in den Schneidenträger 15 eindringt. Beim dargestellten Ausführungsbeispiel ist der Schneidenträger 15 in einer Nut 39 praktisch radial verschiebbar. Dabei wird er durch eine Führung 41 geführt, in welcher ein Steg 43 des Schneidenträgers läuft.

Aus Figur 5 ist ersichtlich, dass Federmittel 45 vorgesehen sind, um das Spiel der Stellschraube auszugleichen. Die Federmittel bestehen aus Federscheiben 45, welche von Stiften 47 in Ausnehmungen 49 am Boden der Nut 39 angeordnet sind.

Aus Figur 7 ist ersichtlich, dass der gegen den Schneidenträger pressbare Keil 58 in einer schräg zur Nut 39 angeordneten Ausnehmung 51 im Grundkörper 11 angeordnet ist, wobei die Schraube 21 der Befestigung des Keils 58 in einem Gewinde 53 dient. Bei engen Platzverhältnissen ist es zweckmässig, wenn die Schraube 21 zwei gegenläufige Gewinde 55, 57 aufweist, sodass kein Schraubenkopf notwendig ist.

Zweckmässigerweise besitzen die Schrauben 19 und 21 Sechskantlöcher mit gleichen Abmessungen, sodass sie mit dem gleichen Schraubenschlüssel geschraubt werden können.

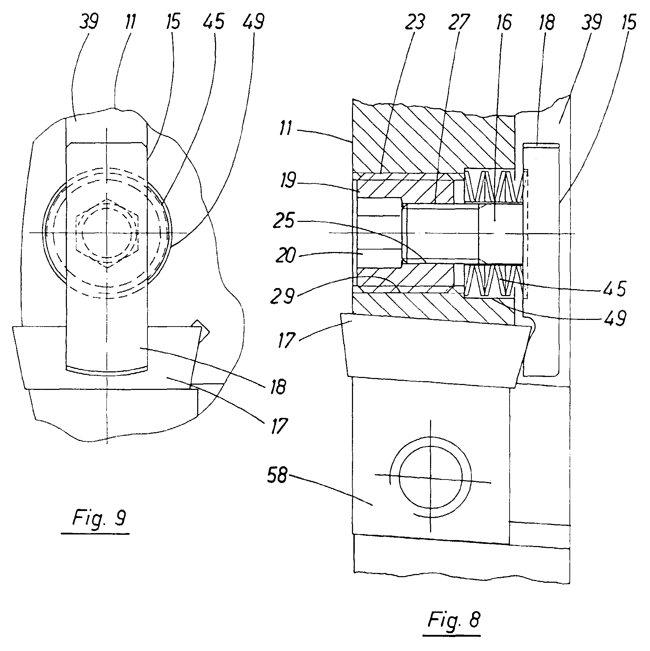

Wie die Figuren 8 und 9 zeigen, lässt sich die Erfindung auch beispielsweise bei Fräsern realisieren. Im Grundkörper 11 des Fräsers ist verschiebbar die Schneide 17 angeordnet. Das Verstellorgan 15 besteht im wesentlichen aus einer Schraube 16, deren Kopf 18 als Mitnehmer für die Schneide 17 ausgebildet ist. Das Verstellorgan 15 ist mit der Stellschraube 19, die ein Sechskantloch 20 oder dergleichen aufweist, verstellbar. Die Stellschraube 19 weist ein erstes Gewinde 23 und ein zweites Gewinde 25 auf, zwischen denen eine Steigungsdifferenz besteht. Das erste Gewinde 23 passt in die Gewindebohrung 29 des Grundkörpers 11 und das zweite Gewinde 25 nimmt das Gewinde 27 des Verstellorgans 15 auf. Wie beim ersten Ausführungsbeispiel kann auch die Stellschraube 19 mit einer Skala versehen sein. Die Markierungsstriche können dann mit einer Markierung am Fräserkörper 11 in Uebereinstimmung gebracht werden. Da aber hier mehr Platz zur Verfügung steht, ist es auch möglich, die Skala am Fräserkörper anzubringen. Um das Gewindespiel auszugleichen, sind in der Ausnehmung 49 Federscheiben 45 angeordnet. Beim dargestellten Ausführungsbeispiel wird der Mitnehmer 18 in einer Nut 39 geführt.

## Patentansprüche

1. Werkzeug mit einem Grundkörper(11), welcher eine Gewindebohrung (29) aufweist, einer Schneide (17), einem Verstellorgan (15) mit einem Gewinde (27), einer Stellschraube (19) mit einem Gewinde (23), das in die Gewindebohrung (29) des Grundkörpers (11) passt und dem Verstellen des Verstellorgans (15) dient, und Arretiermitteln (21,58) zum Arretieren der Schneide (17) bzw. des Verstellorgans (15), dadurch gekennzeichnet, dass die Stellschraube (19) ein zweites Gewinde (25) aufweist, das eine andere Steigung besitzt als das erste Gewinde (23) der Stellschraube (19), und dass das Gewinde (27) des Verstellorgans (15) und das zweite Gewinde (25) der Stellschraube (19) zusammenpassen.

2. Werkzeug nach Anspruch 1, dadurch gekennzeichnet, dass die Steigungsdifferenz zwischen dem erstgenannten (23) und dem zweiten Gewinde (25) den zehnten Teil einer Längenmasseinheit, z.B. mm, beträgt.

3. Werkzeug nach einem der Ansprüche 1 bis 2, dadurch gekennzeichnet, dass die Stellschraube (19) eine Skala (33), z.B. eine Zehnerskala aufweist.

4. Werkzeug nach Anspruch 13, dadurch gekennzeichnet, dass die Skala durch radial am Kopf (31) der Stellschraube (19) angeordnete Striche (33) gebildet ist, die mit einer Markierung (37) in Uebereinstimmung gebracht werden können.

5. Werkzeug nach Anspruch 4, dadurch gekennzeichnet, dass die Markierung (37) eine Breite aufweist, welche der Hälfte des Abstandes zwischen den Enden der Striche (33) am Kopf (31) der Stellschraube (19) entspricht.

6. Werkzeug nach Anspruch 4 oder 5, dadurch gekennzeichnet, dass die Markierung (37) durch eine Rille gebildet ist, die parallel zur Achse der Stellschraube (19) angeordnet ist.

7. Werkzeug nach einem der Ansprüche 1 bis 6, dadurch gekennzeichnet, dass das Verstellorgan (15) passend in einer Nut (39) des Grundkörpers (11) angeordnet ist.

8. Werkzeug nach einem der Ansprüche 1 bis 7, dadurch gekennzeichnet, dass Federmittel (45), z.B. Federscheiben, vorgesehen sind, entgegen der Kraft welcher das Verstellorgan (15) durch Drehen der Stellschraube verstellbar ist.

9. Werkzeug nach Anspruch 8, dadurch gekennzeichnet, dass die Federmittel (45) in einer oder mehreren Ausnehmungen (49) im Boden der Nut (39) angeordnet sind.

10. Werkzeug, insbesondere Bohrstange, nach Anspruch 1, dadurch gekennzeichnet, dass das Verstellorgan (15) als Schneidenträger ausgebildet ist und die Schneide (17) trägt.

11. Werkzeug nach Anspruch 10, dadurch gekennzeichnet, dass die Stellschraube (19) in einer Ebene angeordnet ist, die in einem Winkel von 90° zur Axis des Werkzeugs angeordnet ist.

12. Werkzeug nach Anspruch 10 oder 11, dadurch gekennzeichnet, dass der Schneidenträger (15) Führungsmittel (43), z.B. einen Steg, aufweist, die mit einer Führung (41), z.B. einer Nut, im Grundkörper (11) kooperieren.

13. Werkzeug nach einem der Ansprüche 1 bis 12, dadurch gekennzeichnet, dass die Arretiermittel (21,58) für den Schneidenträger (15) durch einen mit einer Schraube (21) gegen die Schneide oder den Schneidenträger (15) pressbaren Keil (58) gebildet sind, der z.B. in einer schräg zur Nut (39) angeordneten Ausnehmung (51) im Grundkörper (11) angeordnet ist.
